# EUROPEAN PATENT SPECIFICATION

(11) **EP 4 498 492 B1**
(45) Date of publication and mention of the grant of the patent: **28.10.2026**
(21) Application number: 23816257.2
(22) Date of filing: 15.05.2023
(51) Int. Cl.: B23K 26/382, H01M 10/647, H01M 50/211, H01M 50/244, H01M 50/276, B23K 26/70, H01M 50/204, H01M 50/271, B23K 37/04, H01M 50/249, H01M 50/224, B23K 26/21, H01M 10/613, H01M 10/655

(54) **BATTERY MODULE AND METHOD FOR ASSEMBLING THE SAME**
BATTERIEMODUL UND VERFAHREN ZUR MONTAGE
MODULE DE BATTERIE ET MÉTHODE D'ASSEMBLAGE

(30) Priority: 02.06.2022 KR 20220067848
(43) Date of publication of application: 29.01.2025
(73) Proprietor: LG Energy Solution, Ltd., Seoul 07335 (KR)
(72) Inventor: PARK, Jin Woo, Daejeon 34122 (KR); CHOI, Yun Ho, Daejeon 34122 (KR); LEE, Chang Je, Daejeon 34122 (KR); KIM, Tae Wook, Daejeon 34122 (KR)
(74) Representative: Goddar, Heinz J.
(86) International application number: PCT/KR2023/006562
(87) International publication number: WO 2023/234594

(56) References cited:
- KR-A- 20150 005 362
- KR-A- 20210 047 478
- KR-A- 20220 011 500
- KR-A- 20220 043 375
- KR-A- 20220 043 375
- KR-A- 20220 064 829
- KR-B1- 102 117 848
- KR-B1- 102 386 201
- US-A1- 2021 242 525
- US-B2- 9 088 027

## Description

### TECHNICAL FIELD

The present invention relates to a battery module in which a cell block, in which a plurality of battery cells are stacked (coupled) is mounted in a space in which a sub frame and a main frame are coupled to each other, and a method for assembling the same, and more particularly, to a battery module, which is capable of increasing in cooling efficiency, more easily performing an assembly process and a welding process, and preventing spatter generated during the welding from being introduced therein, and a method for assembling the same.

### BACKGROUND ART

KR 2021 0047478 A relates to a battery module capable of securing the rigidity of a battery module and effectively managing it when swelling occurs.

KR 2022 0043375 A relates to a battery module, and more particularly, to a battery module capable of cooling and/or insulation between a frame and a cell using an upper/lower frame structure, and a method of assembling the same.

US 9,088,027 B2 relates to a power storage module in which a plurality of power storage cells are stacked, a manufacturing method thereof, and a working machine on which the power storage module is mounted.

A secondary battery having a high energy density is mounted on an electric vehicle (EV) or a hybrid vehicle (HEV) driven by an electric driving source as well as a portable device.

Such a secondary battery is not only a primary advantage that the use of fossil fuels is significantly reduced, but also an additional advantage that is attracting attention as a new energy source for enhancing environment-friendliness and energy efficiency in that by-products due to the use of energy are not generated at all, and thus, studies on the secondary battery are actively carried out.

Secondary batteries that are widely used in recent years include lithium ion batteries, lithium polymer batteries, nickel-cadmium batteries, nickel-metal hydride batteries, and nickel-zinc batteries. In addition, the unit battery cell, i.e., an operating voltage of the unit battery cell is about 2.5 V to about 4.2 V.

Therefore, when a higher output voltage is required, a plurality of individual battery cells are connected to form a secondary battery module, and a plurality of battery modules are assembled to form a battery pack.

Here, the secondary battery module is configured by gathering cylindrical secondary batteries or by gathering pouch-type secondary batteries.

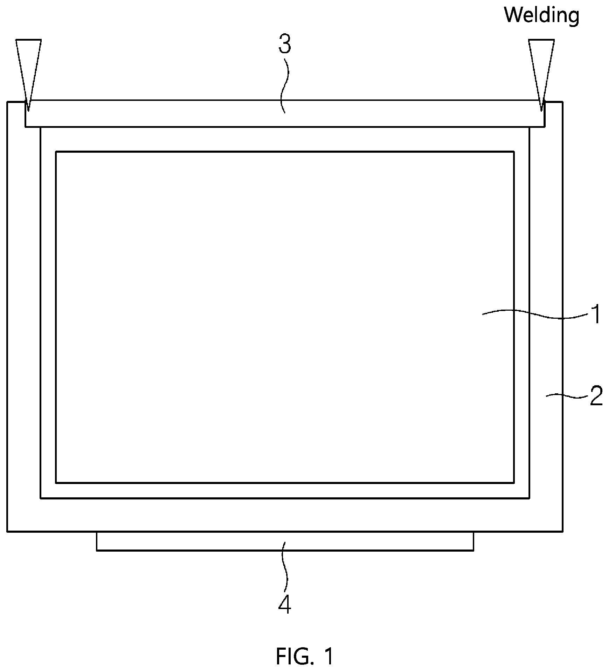

Among them, in the battery module constituted by pouch-type secondary batteries, as illustrated in FIG. 1 that illustrates a longitudinal cross-section of a battery module according to the related art, a cell block 1 in which a plurality of battery cells manufactured as pouch-type secondary batteries are stacked by a predetermined number is mounted in a frame 2 having a 'U'-shaped cross-section, and the upper frame 2 has an opened upper side and is disposed to face a bottom surface and both surfaces of the cell block 1.

In addition, a plate-shaped cover 3 is seated on the opened upper side of the frame 2 to close the opened upper side of the frame 2. The cover 3 is welded and bonded in a brazing manner in a state of being seated on an upper end of the frame 2.

In addition, a cooling part 4 in which a coolant is calculated to cool the cell block 1 and the frame is coupled below a bottom surface of the frame 2.

Since the battery module provided with the above configuration according to the related art has to be managed in dimension of flatness and bending angle when the frame is bent in a 'U' shape, there is a problem in that productivity and quality are deteriorated.

In addition, when the cell block 1 is mounted, a pressure is applied to the frame 2 to forcibly spread the frame 2 (both wall surfaces) out, but in this process, deformation and/or cracks of the frame 2 may occur.

In addition, when swelling of the battery cells constituting the cell block 1 occurs, cracks may occur at a brazing portion (welding portion) of the frame 2 and the cover 3. In addition, in order to increase in cooling performance of the cooling part 4, a thickness of the frame 2 has to be minimized at a portion disposed between the cell block 1 and the cooling part 4, but there is a problem in that the thickness is partially reduced due to processing characteristics of the frame 1, which is bent in the 'U' shape.

In addition, as an upper end of the frame 2 is welded, spatter generated during the welding is introduced into the frame 2, and there is a risk of damaging the cell block 1.

### DISCLOSURE OF THE INVENTION

### TECHNICAL PROBLEM

Therefore, a main object of the present invention is to provide a battery module, which is capable of improving cooling efficiency and more easily and reliably performing to improve production efficiency and reduce a defect rate so as to solve problems of the battery module according to the related art (a problem in which a frame is deformed and/or cracked, a problem in which cooling performance of a cooling part is deteriorated due to a thickness of the frame, and a problem spatter is introduced into the inside due to its own weight during welding), and a method for assembling the same.

### TECHNICAL SOLUTION

A method for assembling a battery module according to the present invention for achieving the above object includes: a sub frame providing process of providing a sub frame having a plate shape; a cell block seating process of seating a cell block (in which a plurality of pouch-type battery cells are stacked), on a top surface of the sub frame; a temporary assembly process of temporarily fixing a main frame having a 'U'-shaped cross-sectional shape, of which one side is opened, and three surfaces are closed, to the sub frame so that the cell block is accommodated into the inside; and a welding process of welding a point at which the main frame and the sub frame are in contact with each other.

A fitting hole is punched in the main frame at a point facing each of both ends of the sub frame, and a protrusion that is insertable into the fitting hole is disposed on each of both the ends of the sub frame, and as the protrusion is inserted into the fitting hole, the main frame and the sub frame are fitted to match each other so as to be temporarily fixed.

A support part protruding downward from each of both sides is disposed on a bottom surface of the sub frame, and when the upper protrusion is inserted into the fitting hole, the main frame is in contact with the support part.

When the protrusion is fitted into the fitting hole, the support part may have a height at which an end of the main frame is spaced apart from the ground.

The method may further include a jig pressing process of applying a pressure through a jig to allow the main frame and the sub frame to be in close contact with each other so that there is no gap at a point at which the main frame and the sub frame are fitted into each other, wherein the jig pressing process may be performed before the welding process starts, and while the welding is performed, the jig may be configured to apply a pressure to the portion at which the main frame and the sub frame are temporarily fixed to fix the main frame and the sub frame.

The jig pressing process may include a correction process of adjusting a direction in which the pressure of the jig is applied to suppress generation of a height difference between the main frame and the sub frame and twisting of the main frame and the sub frame.

A through-hole through which laser for welding passes may be punched in the jig, and while the jig applies a pressure to the main frame and the sub frame, the laser for welding may be irradiated through the through-hole to weld the fitted point.

The method may further include a cooling part bonding process of bonding a cooling part configured to cool the sub frame by exchanging heat with the sub frame on a bottom surface of the sub frame.

Furthermore, the prevent invention additionally provide a battery module that is manufactured through the method for manufacturing the battery module.

A battery module provided in the present invention includes: a sub frame having a plate shape; a cell block configured by coupling a plurality of battery cells to each other and seated on a top surface of the sub frame; and a main frame having a 'U'-shaped cross-sectional shape of which one side is opened, and three surfaces are closed, coupled to the sub frame so that the opened side is closed by the sub frame, and configured to accommodate the cell block therein, wherein the main frame and the sub frame are bonded and fixed to each other through welding.

A fitting hole is punched in the main frame at a point facing each of both ends of the sub frame, and a protrusion that is insertable into the fitting hole is disposed on each of both the ends of the sub frame, wherein the protrusion is inserted into the fitting hole.

A support part protruding downward from each of both sides is disposed on a bottom surface of the sub frame, and when the protrusion is inserted into the fitting hole, the support part may have a height at which an end of the main frame is spaced apart from the ground.

The protrusion is inserted into the fitting hole so that the welding is performed at a point at which the main frame is in contact with the support part.

The battery module may further include a cooling part coupled to a bottom surface of the sub frame to cool the sub frame.

### ADVANTAGEOUS EFFECTS

In the present invention having the above technical features, since the cell block is seated on the sub frame having the plate shape, there may be no need to apply the excessive pressure to both the sidewall surfaces of the main frame, thereby suppressing the occurrence of the deformation and defects. Thus, since the dimensions of the sub frame and the main frame are stabilized, the production efficiency may be more improved to be optimized.

Since the fitting hole is defined in the main frame, and the protrusion is disposed on the sub frame so that the main frame and the sub frame are welded in the state in which the protrusion is temporarily fixed in the fitting hole, the welding quality may be improved, and the uniform welding may be achieved. The fitting hole and the protrusion are provided to provide the guide function when the main frame is coupled.

In addition, the support part may be disposed on the sub frame to increase in weldable area, and the main frame may be maintained in close contact with the sub frame. In addition, since the support part supports the load instead of the cooling part coupled to the bottom surface of the sub frame, the load may be prevented from being applied to the cooling part.

In addition, the cooling performance of the cooling part may be improved by reducing the thickness of the sub frame.

In addition, in the present invention, since the laser welding is performed through the through-hole define in the jig, the spatter generated during the welding may be prevented from being introduced into the inside.

### BRIEF DESCRIPTION OF THE DRAWINGS

FIG. 1 is a longitudinal cross-sectional view illustrating a battery module according to a related art.
FIG. 2 is an exploded perspective view illustrating a state in which a battery module is disassembled according to the present invention.
FIG. 3 is a perspective view of the battery module according to the present invention.
FIG. 4 is a cross-sectional view taken along line A-A in FIG. 3.
FIG. 5 is a view sequentially illustrating processes of performing an assembly according to a method for assembling a battery module provided in the present invention.
FIG. 6 is an enlarged view of portions at which welding is performed in FIG. 5.

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein.

In order to clearly describe the present invention, parts irrelevant to the description are omitted, and the same reference numerals are assigned to the same or similar components throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to a cell block 10, in which a battery module in which a plurality of battery cells are coupled (stacked) in a space in which a sub frame 20 and a main frame 30 are coupled to each other, is mounted, and a method for assembling the same. Hereinafter, embodiments provided in the prevent invention will be described in more detail with reference to the accompanying drawings.

### First embodiment

The prevent invention provides a battery module according to a first embodiment.

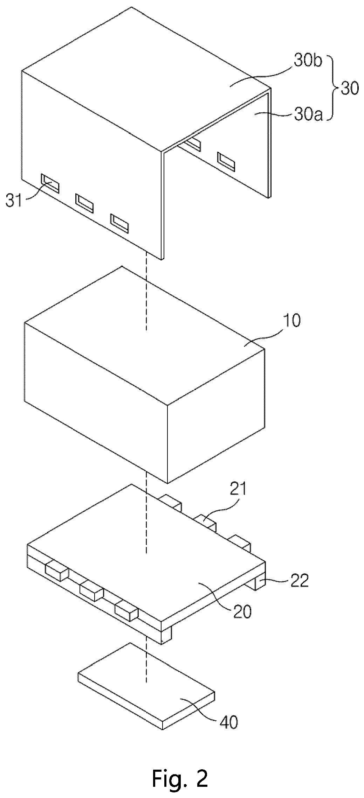

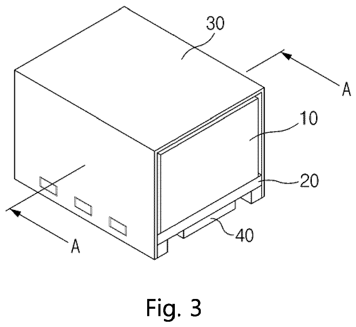

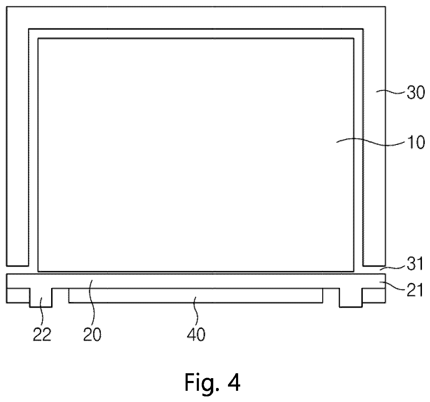

FIG. 2 is an exploded perspective view illustrating a state in which a battery module is disassembled according to the present invention, FIG. 3 is a perspective view of the battery module according to the present invention, and FIG. 4 is a cross-sectional view taken along line A-A in FIG. 3.

Referring to the drawings, a battery module provided in this embodiment includes a cell block 10 provided by stacking a plurality of battery cells, a sub frame 20 having a plate shape, and a main frame 30 welded to be coupled to the sub frame 20.

The cell block 10 has a rectangular parallelepiped shape with a predetermined thickness as a whole because the cell block 10 is provided by stacking the battery cells, each of which has a thin rectangular parallelepiped shape. In addition, the cell block 10 is seated on a top surface of the sub frame 10 having the plate shape. The sub frame 20 is provided in a rectangular shape having an area that is slightly larger than that of the cell block 10.

The main frame 30 has a 'U'-shaped cross-sectional shape, of which one side is opened, and three surfaces are closed, and is coupled to the sub frame 20 in a state in which the opened one side faces downward. That is, the main frame 30 is coupled to the sub frame 20 so that the opened side is closed by the sub frame 20. Thus, the main frame 30 has a flat top surface 30b placed on the cell block 10 and a sidewall surfaces 30a extending to each of both sides of the top surface 30b and bent downward, and the cell block 101 is accommodated in an inner space defined by the main frame 30 and the sub frame 20.

In addition, the main frame 30 and the sub frame 20 are welded to be bonded at a point at which the main frame 30 and the sub frame 20 are in contact with each other.

In the present invention, the sub frame 20 and the main frame 30 are configured to be fitted to match each other so that the sub frame 20 and the main frame 30 are temporarily fixed before the welding is performed.

That is, a plurality of fitting holes 31 are punched in lower ends of both the sidewall surfaces 30a of the main frame 30 at intervals therebetween at points facing both ends of the sub frame 20, respectively. The fitting hole 31 may have a circular or other shapes, but is provided in a rectangular shape (as illustrated in FIG. 2) so that the fitting hole 31 is adjustable in vertical, horizontal, and front and rear directions when the welding is performed.

In addition, a protrusion 21 that is insertable into the fitting hole 31 at a point at which the fitting hole 31 is disposed when the main frame 30 enters is disposed on each of both ends (both sides in a longitudinal direction) of the sub frame 20. Thus, the main frame 30 and the sub frame 20 may be temporarily fixed by inserting the protrusion 21 into the fitting hole 31.

In addition, the support part 22 protrudes downward from both sides of a bottom surface of the sub frame 20 with a gap therebetween. The support part 22 has a height that allows an end of the main frame 30 (more precisely, an end of each of the sidewall surfaces of the main frame) to be spaced from the ground when the protrusion 21 enters the fitting hole 31.

In addition, when the protrusion 21 is inserted into the fitting hole 31, both the sidewall surfaces 30a of the main frame 30 may be in contact with the support part 22, and the welding may be performed at the contact point.

In addition, a cooling part 40 may be coupled to the bottom surface of the sub frame 20 to cool the sub frame 20 and the cell block 10 by exchanging heat with the sub frame 20.

### Second embodiment

The prevent invention provides a method for assembling a battery module according to a second embodiment.

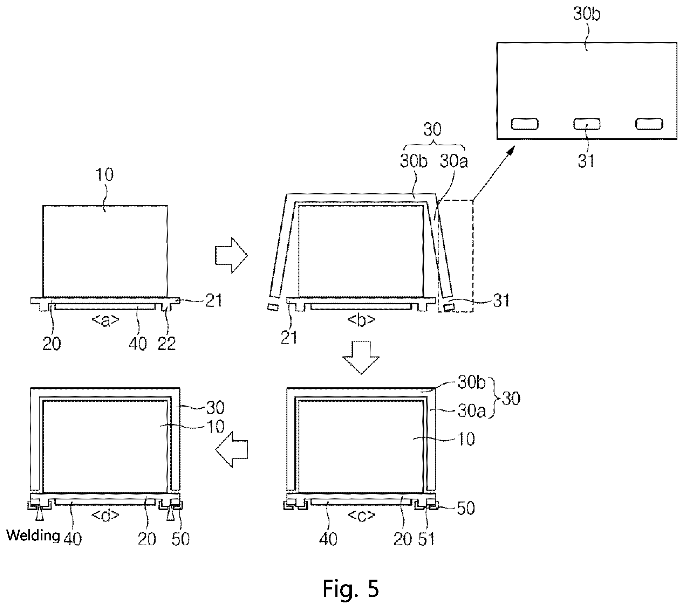

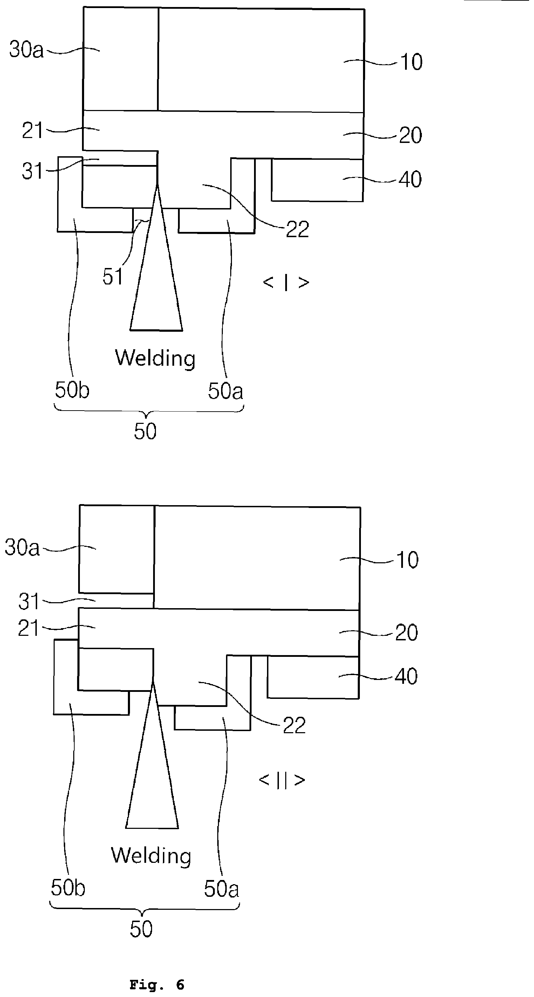

FIG. 5 is a view sequentially illustrating processes of performing an assembly according to a method for assembling a battery module provided in the present invention, and FIG. 6 is an enlarged view of portions at which welding is performed in FIG. 5.

Referring to FIGS. 5 and 6, a method for assembling a battery module provided in this embodiment includes a sub frame providing process, a cell block seating process, a temporary assembly process, and a welding process.

That is, as illustrated in <a> of Fig. 5, in the sub frame providing process, a plate-shaped sub frame 20 is provided, and in the cell block seating process, the cell block 10 is seated on a top surface of the sub frame 20.

Here, the cell block 10 is disposed at a center so as not to be deviated from a support part 22 protruding from a bottom surface of the sub frame 20 to each of both sides.

Then, as illustrated in <b> of Fig. 5, the temporary assembly process of temporarily fixing the main frame 30 to the sub frame 20 is performed in a state in which the cell block 10 is seated on the sub frame 20.

The main frame 30 is inserted to be slightly spread in a state in which the sidewall surface 30a bent at each of both sides of a top surface 30b is elastically deformed, and when force applied to the sidewall surface 30a is released, as illustrated in <c> of Fig. 5, the sidewall surface 30a is elastically restored, and the protrusion 21 of the sub frame 20 is inserted into the fitting hole 31 defined in the main frame 30 and then is temporarily fixed.

In the state in which the sub frame 20 and the main frame 30 are temporarily fixed, the point at which the main frame 30 and the sub frame 20 are in contact with each other is welded as illustrated in <d> of Fig. 5 to perform the welding process.

In addition, as described above, two support parts 22 protrude downward at an interval from each other on the bottom surface of the sub frame 20, and when the protrusion 21 is inserted into the fitting hole 31, the sidewall surface 30a of the main frame 30 is in contact with the support part 22.

Here, when the protrusion 21 is inserted into the fitting hole 31, as illustrated in FIG. 4, the support part 22 has a height at which a lower end of the sidewall surface 30a of the main frame 30 is spaced apart from the ground.

Before the welding process is performed (or at the same time as the welding process is performed), a jig pressing process of applying a pressure through a jig 50 so as to allow the main frame 30 and the sub frame 20 to be in close contact with each other so that there is no gap at the point at which the main frame 30 and the sub frame 20 are fitted with each other.

The jig pressing process is performed before or at the same time as the welding process starts, and the jig 50 applies a pressure to the portion at which the main frame 30 and the sub frame 20 are temporarily fixed to prevent the main frame 30 and the sub frame 20 from being shaken. The jig 50 continuously applies a pressure while the welding is in progress to fix the main frame 30 and the sub frame 20.

The jig pressing process may include a correction process of adjusting a direction in which the pressure of the jig 50 is applied to suppress generation of a height difference between the main frame 30 and the sub frame 20 and twisting of the main frame 30 and the sub frame 20.

That is, as illustrated in FIG. 6, the pressure may be applied so that the welding is performed (<II> state) in a state in which the protrusion 21 is in contact with an upper side of the fitting hole 31 (<I> state), or the protrusion 21 is in contact with a lower side of the fitting hole 31 according to the position of the main frame 30.

However, in both the cases (both the <I> state and the <II> state), it is preferable that the pressure is applied in a lateral direction (left and right direction in the drawing) so that the lowermost end of the sidewall surface 30a is in close contact with the protrusion 21. Therefore, the jig 50 may be divided into two portions 50a and 50b, which are movable individually, and a space may be defined between the two portions 50a and 50b so that a laser passes therethrough (a through-hole may be defined).

That is, a through-hole 51 is punched in the jig 50 as a space through which the laser for welding passes so that the welding is performed at the point at which the sidewall surface 30a of the main frame 30 and the support part 22 of the sub frame 20 are in contact with each other. While the jig 50 applies the pressure to the main frame 30 and the sub frame 20, the laser for the welding may be irradiated through the through-hole 51 to perform the welding at the fitted point.

In addition, a cooling part bonding process of bonding a cooling part 40, which cools the sub frame 20 by exchanging heat with the sub frame 20, to the bottom surface of the sub frame 20 may be performed. Here, the cooling part 40 may be mounted to be disposed between the two support parts 22.

In the present invention having the above technical features, since the cell block 10 is seated on the sub frame 20 having the plate shape, there may be no need to apply an excessive pressure to both the sidewall surfaces 30a of the main frame 30, thereby suppressing an occurrence of the deformation and defects. Thus, since dimensions of the sub frame 20 and the main frame 30 may be stabilized to improve production efficiency.

Since the fitting hole 31 is defined in the main frame 30, and the protrusion 21 is disposed on the sub frame 20 so that welding is performed in the state in which the protrusion 21 is temporarily fixed in the fitting hole 31, the welding quality may be improved, and the uniform welding may be achieved. The fitting hole 31 and the protrusion 21 may be provided to provide a guide function when the main frame 30 is coupled.

In addition, the support part 22 may be disposed on the sub frame 20 to increase in weldable area, and the main frame 30 may be maintained in close contact with the sub frame 20. In addition, since the support part 22 supports a load instead of the cooling part 40 coupled to the bottom surface of the sub frame 20, the load may be prevented from being applied to the cooling part 40.

In addition, cooling performance of the cooling part 40 may be improved by reducing a thickness of the sub frame 20.

In addition, in the present invention, since the laser welding is performed through the through-hole 51 define in the jig 50, spatter generated during the welding may be prevented from being introduced into the inside.

### [Description of the Symbols]

10: Cell block
20: Sub frame
21: Protrusion
22: Support part
30: Main frame
31: Fitting hole
40: Cooling part

## Claims

1. A method for assembling a battery module, the method comprising:
a sub frame (20) providing process of providing a sub frame (20) having a plate shape;
a cell block (10) seating process of seating a cell block (10), in which a plurality of battery cells are coupled to each other, on a top surface of the sub frame (20);
a temporary assembly process of temporarily fixing a main frame (30) having a cross-sectional shape, of which one side is opened, and three surfaces are closed, to the sub frame (20) so that the cell block (10) is accommodated into the inside; and
a welding process of welding a point at which the main frame (30) and the sub frame (20) are in contact with each other, **characterized in that** a fitting hole (31) is punched in the main frame (30) at a point facing each of both ends of the sub frame (20), and a protrusion (21) that is insertable into the fitting hole (31) is disposed on each of both the ends of the sub frame (20), and
as the protrusion (21) is inserted into the fitting hole (31), the main frame (30) and the sub frame (20) are fitted to match each other so as to be temporarily fixed, wherein a support part (22) protruding downward from each of both sides is disposed on a bottom surface of the sub frame (20), and when the upper protrusion (21) is inserted into the fitting hole (31), the main frame (30) is in contact with the support part (22).

2. The method of claim 1, wherein, when the protrusion (21) is fitted into the fitting hole (31), the support part (22) has a height at which an end of the main frame (30) is spaced apart from the ground.

3. The method of claim 1, further comprising a jig pressing process of applying a pressure through a jig to allow the main frame (30) and the sub frame (20) to be in close contact with each other so that there is no gap at a point at which the main frame (30) and the sub frame (20) are fitted into each other,
wherein the jig pressing process is performed before the welding process starts, and while the welding is performed, the jig is configured to apply a pressure to the portion at which the main frame (30) and the sub frame (20) are temporarily fixed to fix the main frame (30) and the sub frame (20).

4. The method of claim 3, wherein the jig pressing process comprises a correction process of adjusting a direction in which the pressure of the jig is applied to suppress generation of a height difference between the main frame (30) and the sub frame (20) and twisting of the main frame (30) and the sub frame (20).

5. The method of claim 3, wherein a through-hole through which laser for welding passes is punched in the jig, and while the jig applies a pressure to the main frame (30) and the sub frame (20), the laser for welding is irradiated through the through-hole to weld the fitted point.

6. The method of claim 1, further comprising a cooling part (40) bonding process of bonding a cooling part (40) configured to cool the sub frame (20) by exchanging heat with the sub frame (20) on a bottom surface of the sub frame (20).

7. A battery module comprising:
a sub frame (20) having a plate shape;
a cell block (10) configured by coupling a plurality of battery cells to each other and seated on a top surface of the sub frame (20); and
a main frame (30) having a cross-sectional shape of which one side is opened, and three surfaces are closed, coupled to the sub frame (20) so that the opened side is closed by the sub frame (20), and configured to accommodate the cell block (10) therein,
wherein the main frame (30) and the sub frame (20) are bonded and fixed to each other through welding, **characterized in that** a fitting hole (31) is punched in the main frame (30) at a point facing each of both ends of the sub frame (20), and a protrusion (21) that is insertable into the fitting hole (31) is disposed on each of both the ends of the sub frame (20), wherein the protrusion (21) is inserted into the fitting hole (31), wherein a support part (22) protruding downward from each of both sides is disposed on a bottom surface of the sub frame (20), and when the protrusion (21) is inserted into the fitting hole (31), the support part (22) has a height at which an end of the main frame (30) is spaced apart from the ground.

8. The battery module of claim 7, wherein the protrusion (21) is inserted into the fitting hole (31) so that the welding is performed at a point at which the main frame (30) is in contact with the support part (22).

9. The battery module of claim 7, further comprising a cooling part (40) coupled to a bottom surface of the sub frame (20) to cool the sub frame (20).

## Patentansprüche

1. Verfahren zum Zusammenbauen eines Batteriemoduls, wobei das Verfahren umfasst:
einen Unterrahmen(20)-Bereitstellungsprozess des Bereitstellens eines Unterrahmens (20), der eine Plattenform aufweist;
einen Zellenblock(10)-Setzprozess des Setzens eines Zellenblocks (10), in dem eine Vielzahl von Batteriezellen miteinander gekoppelt sind, auf einer oberen Oberfläche des Unterrahmens (20);
einen temporären Montageprozess des temporären Befestigens eines Hauptrahmens (30), der eine Querschnittsform aufweist, von der eine Seite geöffnet ist und drei Oberflächen geschlossen sind, an dem Unterrahmen (20), so dass der Zellenblock (10) im Inneren untergebracht ist; und
einen Schweißprozess des Schweißens eines Punktes, an dem der Hauptrahmen (30) und der Unterrahmen (20) miteinander in Kontakt sind, **dadurch gekennzeichnet, dass** ein Passloch (31) in den Hauptrahmen (30) an einem Punkt gestanzt ist, der den beiden Enden des Unterrahmens (20) zugewandt ist, und ein Vorsprung (21), der in das Passloch (31) einsetzbar ist, an jedem der beiden Enden des Unterrahmens (20) angeordnet ist, und
wobei, wenn der Vorsprung (21) in das Passloch (31) eingesetzt wird, der Hauptrahmen (30) und der Unterrahmen (20) zueinander passend eingepasst werden, um temporär befestigt zu werden, wobei ein Stützteil (22), das von den beiden Seiten nach unten vorsteht, auf einer unteren Oberfläche des Unterrahmens (20) angeordnet ist, und wenn der obere Vorsprung (21) in das Passloch (31) eingesetzt wird, kommt der Hauptrahmen (30) mit dem Stützteil (22) in Kontakt.

2. Verfahren nach Anspruch 1, wobei, wenn der Vorsprung (21) in das Passloch (31) eingepasst wird, das Stützteil (22) eine Höhe aufweist, bei der ein Ende des Hauptrahmens (30) vom Boden beabstandet ist.

3. Verfahren nach Anspruch 1, ferner umfassend einen Spannvorrichtungs-Pressprozess des Ausübens eines Drucks durch eine Spannvorrichtung, um zu ermöglichen, dass der Hauptrahmen (30) und der Unterrahmen (20) in engem Kontakt miteinander sind, so dass es keinen Spalt an einem Punkt gibt, an dem der Hauptrahmen (30) und der Unterrahmen (20) ineinander eingepasst sind,
wobei der Spannvorrichtungs-Pressprozess durchgeführt wird, bevor der Schweißprozess beginnt, und, während das Schweißen durchgeführt wird, ist die Spannvorrichtung dazu konfiguriert, einen Druck auf den Abschnitt auszuüben, an dem der Hauptrahmen (30) und der Unterrahmen (20) temporär befestigt sind, um den Hauptrahmen (30) und den Unterrahmen (20) zu befestigen.

4. Verfahren nach Anspruch 3, wobei der Spannvorrichtungs-Pressprozess einen Korrekturprozess des Einstellens einer Richtung umfasst, in der der Druck der Spannvorrichtung ausgeübt wird, um die Erzeugung einer Höhendifferenz zwischen dem Hauptrahmen (30) und dem Unterrahmen (20) und das Verdrehen des Hauptrahmens (30) und des Unterrahmens (20) zu unterdrücken.

5. Verfahren nach Anspruch 3, wobei ein Durchgangsloch, durch das der Laser zum Schweißen verläuft, in die Spannvorrichtung gestanzt ist, und, während die Spannvorrichtung einen Druck auf den Hauptrahmen (30) und den Unterrahmen (20) ausübt, der Laser zum Schweißen durch das Durchgangsloch bestrahlt wird, um den eingepassten Punkt zu schweißen.

6. Verfahren nach Anspruch 1, ferner umfassend einen Kühlteil(40)-Bondingprozess des Bondens eines Kühlteils (40), das dazu ausgelegt ist, den Unterrahmen (20) durch Wärmeaustausch mit dem Unterrahmen (20) auf einer unteren Oberfläche des Unterrahmens (20) zu kühlen.

7. Batteriemodul, umfassend:
einen Unterrahmen (20), der eine Plattenform aufweist;
einen Zellenblock (10), der durch Kopplung einer Vielzahl von Batteriezellen miteinander konfiguriert ist und auf einer oberen Oberfläche des Unterrahmens (20) gesetzt ist; und
einen Hauptrahmen (30), der eine Querschnittsform aufweist, von der eine Seite geöffnet ist und drei Oberflächen geschlossen sind, der mit dem Unterrahmen (20) gekoppelt ist, so dass die geöffnete Seite durch den Unterrahmen (20) geschlossen ist, und der dazu ausgelegt ist, den Zellenblock (10) darin aufzunehmen,
wobei der Hauptrahmen (30) und der Unterrahmen (20) durch Schweißen miteinander verbunden und befestigt sind, **dadurch gekennzeichnet, dass** ein Passloch (31) in den Hauptrahmen (30) an einem Punkt gestanzt ist, der den beiden Enden des Unterrahmens (20) zugewandt ist, und ein Vorsprung (21), der in das Passloch (31) einsetzbar ist, an jedem der beiden Enden des Unterrahmens (20) angeordnet ist, wobei der Vorsprung (21) in das Passloch (31) eingesetzt ist, wobei ein Stützteil (22), das von den beiden Seiten nach unten vorsteht, auf einer unteren Oberfläche des Unterrahmens (20) angeordnet ist, und wenn der Vorsprung (21) in das Passloch (31) eingesetzt wird, weist das Stützteil (22) eine Höhe auf, bei der ein Ende des Hauptrahmens (30) vom Boden beabstandet ist.

8. Batteriemodul nach Anspruch 7, wobei der Vorsprung (21) in das Passloch (31) eingesetzt ist, so dass das Schweißen an einem Punkt durchgeführt wird, an dem der Hauptrahmen (30) mit dem Stützteil (22) in Kontakt ist.

9. Batteriemodul nach Anspruch 7, ferner umfassend ein Kühlteil (40), das mit einer unteren Oberfläche des Unterrahmens (20) gekoppelt ist, um den Unterrahmen (20) zu kühlen.

## Revendications

1. Procédé d'assemblage d'un module de batterie, le procédé comprenant :
un faux-châssis (20) comportant un processus d'agencement d'un faux-châssis (20) en forme de plaque ;
un processus de calage d'un bloc de cellules (10) consistant à caler un bloc de cellules (10), dans lequel une pluralité de cellules de batterie sont couplées entre elles, sur une surface supérieure du faux-châssis (20) ;
un processus d'assemblage provisoire consistant à fixer provisoirement un châssis principal (30), de forme transversale, dont un côté est ouvert, et trois surfaces sont fermées, au faux-châssis (20) de sorte que le bloc de cellules (10) soit installé à l'intérieur ; et
un processus de soudage comportant le soudage d'un point auquel le châssis principal (30) et le faux-châssis (20) sont au contact l'un avec l'autre, **caractérisé en ce qu'**un orifice d'assemblage (31) est poinçonné dans le châssis principal (30) en un point faisant face aux deux bouts du faux-châssis (20), et une saillie (21) pouvant être insérée dans l'orifice d'assemblage (31) étant disposée sur chacun des deux bouts du faux-châssis (20), et
lors de l'insertion de la saillie (21) dans l'orifice d'assemblage (31), le châssis principal (30) et le faux-châssis (20) sont installés afin de correspondre l'un avec l'autre de façon à être fixés provisoirement, une partie de support (22) saillante vers le bas depuis chacun des deux côtés étant disposée sur une surface inférieure du faux-châssis (20), et lors de l'insertion de la saillie supérieure (21) dans l'orifice d'assemblage (31), le châssis principal (30) étant au contact de la partie de support (22).

2. Procédé selon la revendication 1, la saillie (21) étant montée dans l'orifice d'assemblage (31), la partie de support (22) présentant une hauteur à laquelle un bout du châssis principal (30) est espacé du sol.

3. Procédé selon la revendication 1, comprenant également un processus de pressage au gabarit comportant l'application d'une pression à travers un gabarit afin de permettre un contact étroit entre le châssis principal (30) et le faux-châssis (20) pour assurer l'absence de tout écart lors du montage l'un dans l'autre du châssis principal (30) et du faux-châssis (20),
le processus de pressage au gabarit étant effectué avant le lancement du processus de soudage, et, au cours du soudage, le gabarit étant configuré pour appliquer une pression sur la partie à laquelle le châssis principal (30) et le faux-châssis (20) sont fixés provisoirement pour fixer le châssis principal (30) et le faux-châssis (20).

4. Procédé selon la revendication 3, le processus de pressage au gabarit comprenant un processus de correction comportant l'ajustement d'une direction dans laquelle la pression du gabarit est appliquée pour supprimer la génération d'une différence de hauteur entre le châssis principal (30) et le faux-châssis (20), et la torsion du châssis principal (30) et du faux-châssis (20).

5. Procédé selon la revendication 3, un orifice traversant, par lequel passe le laser pour le soudage, étant poinçonné dans le gabarit, et lors de l'application d'une pression sur le châssis principal (30) et le faux-châssis (20) par le gabarit, le laser pour le soudage étant émis à travers l'orifice traversant pour souder le point monté.

6. Procédé selon la revendication 1, comprenant en outre un processus de fixation d'un élément de refroidissement (40) comportant la fixation d'un élément de refroidissement (40) configuré pour refroidir le faux-châssis (20) en échangeant de la chaleur avec le faux-châssis (20) sur une surface inférieure du faux-châssis (20).

7. Module de batterie, comprenant :
un faux châssis (20) en forme de plaque ;
un bloc de cellules (10) configuré en couplant entre elles une pluralité de cellules de batterie, et calé sur une surface supérieure du faux-châssis (20) ; et
un châssis principal (30), de forme transversale, dont un côté est ouvert, et trois surfaces sont fermées, couplé au faux-châssis (20) de sorte que le côté ouvert soit fermé par le faux-châssis (20), et configuré pour y accueillir le bloc de cellules (10),
le châssis principal (30) et le faux-châssis (20) étant liés et fixés l'un à l'autre par soudage, **caractérisé en ce qu'**un orifice d'assemblage (31) est poinçonné dans le châssis principal (30) en un point faisant face aux deux bouts du faux-châssis (20), et une saillie (21) pouvant être insérée dans l'orifice d'assemblage (31) est disposée sur chacun des deux bouts du faux-châssis (20), la saillie (21) étant insérée dans l'orifice d'assemblage (31), une partie de support (22) faisant saillie vers le bas depuis chacun des deux côtés étant disposée sur une surface inférieure du faux-châssis (20), et lors de l'insertion de la saillie (21) dans l'orifice d'assemblage (31), la partie de support (22) présentant une hauteur à laquelle un bout du châssis principal (30) est espacé du sol.

8. Module de batterie selon la revendication 7, la saillie (21) étant insérée dans l'orifice d'assemblage (31) de sorte que le soudage soit effectué en un point auquel le châssis principal (30) est au contact de la partie de support (22).

9. Module de batterie selon la revendication 7, comprenant en outre un élément de refroidissement (40) couplé à une surface inférieure du faux-châssis (20) pour refroidir le faux-châssis (20).
